# EUROPEAN PATENT SPECIFICATION

(11) **EP 0 731 140 B1**
(45) Date of publication and mention of the grant of the patent: **03.09.2003**
(21) Application number: 95107212.3
(22) Date of filing: 10.05.1995
(51) Int. Cl.: C08L 69/00, C08K 5/521

(54) **Flameproof thermoplastic resin compositions**
Flammhemmende thermoplastische Harzzusammensetzungen
Composition de résines thermoplastiques ignifuges

(30) Priority: 07.03.1995 KR 9504542
(43) Date of publication of application: 11.09.1996
(73) Proprietor: CHEIL INDUSTRIES INC., Taegu 702-050 (KR)
(72) Inventor: Lee, Kyu-cheol, Suwon, Kyungki-do (KR); Yang, Sam-joo, Suwon, Kyungki-do (KR); Jang, Bok-nam, Koonpo, Kyungki-do (KR)
(74) Representative: Hering, Hartmut, Dipl.-Ing.

(56) References cited:
- EP-A- 0 594 021
- EP-A- 0 635 547
- EP-A- 0 640 655
- EP-A- 0 682 081
- EP-A- 0 714 932
- US-A- 4 692 488
- US-A- 5 204 394

## Description

The present invention relates to flameproof thermoplastic resin compositions, and specifically to those for molding, comprising a base resin consisting of a polycarbonate and a styrene-containing graft copolymer, a phosphorous compound and a perfluoroalkane polymer. The phosphorous compound used as flame-retardant is a blend of triarylphosphates and oligomeric phosphates, or an oligomeric phosphate. The thermoplastic resin compositions of the present invention may further contain such additives as inorganic fillers, heat stabilizers, dyes, or pigments in fractions as needed.

A polycarbonate molding composition is widely used for parts of automobiles and electrical appliances, which has a good combination of transparency, high impact strength and heat resistance. However the polycarbonate molding composition does not have a good processability during a molding process. Accordingly other resins are used with a polycarbonate resin. For example, a molding composition comprising a polycarbonate resin and a styrenic resin has a good processability as well as a high notched impact strength.

Furthermore, the polycarbonate molding composition used for housing materials of home appliances and computers should be flame resistant for the sake of prevention of fire. For this purpose, halogen and/or antimony containing compound has been used to render flame retardency to a thermoplastic molding composition. In U.S. Patent Nos. 4,983,658 and 4,883,835, a halogen-containing compound is used as flame-retardant. The halogen containing compound, however, results in the corrosion of the mold itself by the hydrogen halide gases released during a molding process and is fatally harmful due to the toxic gases liberated in the case of fire.

U.S. Patent No. 4,692,488 discloses a thermoplastic molding composition comprising a halogen-free aromatic polycarbonate, a halogen-free thermoplastic copolymer of styrene and acrylonitrile, a halogen-free phosphorous compound, a tetrafluoroethylene polymer and graft polymers of ABS. The use of a phosphorous compound and a perfluoroalkane polymer to render flame retardency to a polycarbonate/ABS resin composition, as disclosed in U.S. Patent No. 4,692,488, prevents the dripping of flaming particles during combustion. However the resin composition results in satisfactory flame retardency, but unsatisfactory surface segregation of the flame retardants during a molding process, called "juicing", degrading the physical properties of the resin composition. In order to improve the juicing phenomenon, an oligomeric phosphate is used in the preparation of a polycarbonate/ABS resin composition, as disclosed in U.S. Patent No. 5,204,394. U.S. Patent No. 5,204,394 discloses a polymer mixture comprising an aromatic polycarbonate, a styrene-containing copolymer and/or styrene-containing graft copolymer and an oligomeric phosphate or a blend of oligomeric phosphates as flame retardant.

In the U.S. Patents mentioned above, representative examples of the phosphorous compound are triarylphosphates and oligomeric phosphates. In the process of using triarylphosphates, a juicing phenomenon occurs during a molding process because the triarylphosphates form laminae on the surface to which a strong stress is applied, the heat resistance of the resin composition deteriorates, and inferior processability occurs due to difficulties in blending and feeding. On the other hand, in the process of using oligomeric phosphates, a juicing phenomenon does not occur, but the appearance of molded articles is not good with color stripes.

In case of using a base resin comprising a polycarbonate, a styrene-containing polymer and a styrene-containing graft copolymer in the resin composition, the present inventors have found that the particles of the styrene-containing polymer agglomerate with the particles of the styrene-containing graft copolymer. It is believed that the styrene-containing polymer has a good compatibility with the styrene-containing graft copolymer. In the resin composition, the particles of the styrene-containing graft copolymer are not evenly distributed, thereby causing an agglomeration. This phenomenon cannot provide a resin composition with favorable physical properties. Especially the physical properties of the resin composition will be deteriorated during a molding process.

Accordingly the present inventors developed a new thermoplastic resin composition with a good combination of heat resistance, no juicing phenomenon, processability, appearance and flame retardency, by comprising a base resin consisting of a polycarbonate and a styrene-containing graft copolymer, a phosphorous compound and a perfluoroalkane polymer.

An object of the present invention is to provide a flameproof thermoplastic resin composition which comprises a base resin consisting of a polycarbonate and a styrene-containing graft copolymer, a phosphorous blend of triarylphosphates and oligomeric phosphates, and a perfluoroalkane polymer.

Another object of the invention is to provide a flameproof thermoplastic resin composition which comprises a base resin consisting of a polycarbonate and a styrene-containing graft copolymer, an oligomeric phosphate and a perfluoroalkane polymer.

A further object of the invention is to provide a flameproof thermoplastic resin composition with a good combination of heat resistance, no juicing phenomenon, processability and appearance, which comprises a base resin, a phosphorous blend of triarylphosphates and oligomeric phosphates, and a perfluoroalkane polymer.

A further object of the invention is to provide a flameproof thermoplastic resin composition with a good combination of heat resistance, no juicing phenomenon, processability and appearance, which comprises a base resin, an oligomeric phosphate, and a perfluoroalkane polymer.

According to the present invention there is provided flameproof thermoplastic resin composition as set out in claim 1.

Preferred embodiments of the present invention are subject matters of the subclaims 2 to 4.

### Brief Description of the Drawings

Fig.1 represents a transmission electron photomicrograph of a resin composition of Example 1 according to this invention;
Fig.2 represents a transmission electron photomicrograph of a resin composition of Example 2 according to this invention;
Fig.3 represents a transmission electron photomicrograph of a resin composition of Example 3 according to this invention;
Fig.4 represents a transmission electron photomicrograph of a resin composition of Comparative Example 1 according to this invention;
Fig.5 represents a transmission electron photomicrograph of a resin composition of Comparative Example 2 according to this invention;
Fig.6 represents a transmission electron photomicrograph of a resin composition of Comparative Example 3 according to this invention; and
Fig.7 represents a transmission electron photomicrograph of a resin composition of Comparative Example 4 according to this invention.

The flameproof thermoplastic resin compositions according to the invention comprise a base resin(A), a phosphorous compound(B) and a perfluoroalkane polymer<C). The detailed descriptions of each component are as follows:

### (A) Base Resin

The base resin used in this invention is a blend of a thermoplastic, halogen-free polycarbonate and a styrene-containing graft copolymer. More particularly, the base resin consists of 80 to 96 % by weight of a thermoplastic, halogen-free polycarbonate and 20 to 4 % by weight of a styrene-containing graft copolymer, excluding a SAN copolymer which is polymerized with at least one organic material selected from the group consisting of styrene, α-substituted styrene and nucleus-substituted styrene and at least one organic material selected from the group consisting of methylmethacrylate, N-substituted meleimide and acrylonitrile.

According to substituted groups, there are aromatic polycarbonates, aliphatic polycarbonates, and aromatic/aliphatic polycarbonates, and a polycarbonate or a blend of the polycarbonates may be used in this invention. Aromatic polycarbonates are preferable, and aromatic polycarbonates synthesized from 2,2'-bis(4-hydroxylphenyl)propane, called "Bisphenol A", are more preferable.

The styrene-containing graft copolymer is prepared by copolymerization of 30 to 70 % by weight of rubber with a glass transition temperature less than 10 °C, 20 to 55 % by weight of at least one organic material selected from the group consisting of styrene, α-substituted styrene and nucleus-substituted styrene, 5 to 25 % by weight of acrylonitrile and 0 to 20 % by weight of methylmethacrylate. The styrene-containing graft copolymer should have a graft index of 40 to 90 % and a gel content of 40 % or above,

The rubbers used to prepare a styrene-containing graft copolymer are acryl rubber, butadiene rubber, ethylene/propylene rubber, styrene/butadiene rubber and acrylonitrile/butadiene rubber, of which acryl rubber and butadiene rubber are more preferable.

The base resin of this invention does not include a styrene-containing copolymer(so called, "SAN"), which is polymerized with at least one organic material selected from the group consisting of styrene, α-substituted styrene and nucleus-substituted styrene and at least one organic material selected from the group consisting of methylmethacrylate, N-substituted maleimide and acrylonitrile.

### (B) Phosphorous Compound

The phosphorous compound used in this invention is a phosphorous blend of triarylphosphates and oligomeric phosphates, or a oligomeric phosphate.

The triarylphosphates and oligomeric phosphates are represented as the general formula(I) 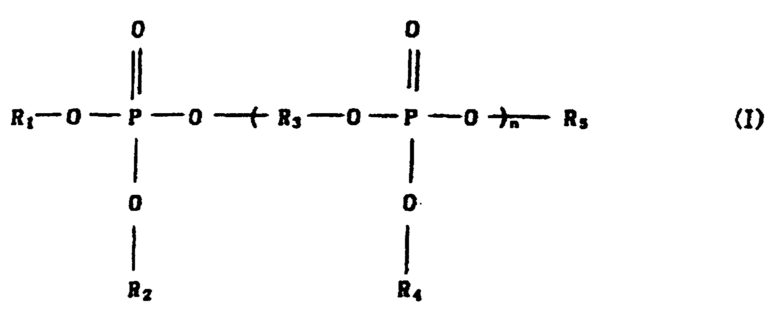 wherein R₁, R₂, R₄ and R₅ independently of one another are C₆-C₂₀ aryl or alkyl-substituted C₆-C₂₀ aryl R₃ is C₆-C₂₀ arylene or alkyl-substituted C₆-C₂₀ arylene and the average n is 0.3 to 0.8.

The average n of the phosphorous compound should be in the range of 0.3 to 0.8. Thus, the phosphorous compound is a blend of the phosphates represented by the general formula(I), wherein n is 0, 1, 2, 3, 4 or 5. Where n is 0, the phosphorous compound is monophosphates, and where n is 1, 2, 3, 4 or 5, the phosphorous compound is oligomeric phosphates.

The triarylphosphates are phosphorous compounds where n is 0 in the general formula(I). The examples of the triarylphosphates are triphenylphosphate, tri(2.6-dimethylphenyl) phosphate, tri(4-methyl-phenyl)phosphate, tricresylphosphate, diphenyl 2-ethylcresylphosphate, diphenylcresylphosphate, tri(isopropylphenyl)phosphate, trixylenylphosphate, xylenyldiphenylphosphate, etc.

When the monophosphates with n=0 are only used in a resin composition, a juicing problem appears during a molding process, because the monophosphates are volatile at about 200°C or above. If a blend of phosphorous compounds with the average n of 1.2 or above is used in a resin composition, a juicing problem can be improved, but the flame retardency and physical properties deteriorate. The phosphorous compound with the average n from 0.3 to 0.8 is used in this invention so as to improve the physical properties as well as flame retardency.

In order for the phosphorous compound to have the average n from 0.3 to 0.8, the phosphorous compound consists of 30 to 60 % weight of triarylphosphates and 70 to 40 % by weight of oligomeric phosphates.

Also a oligomeric phosphate which is used in this invention can be prepared, in which the average n of the oligomeric phosphate is 0.3 to 0.8. The oligomeric phosphate is prepared by adding phenol, resocinol and dichloromagnesium to benzene, heating the solution, and dropping trichlorophosphinoxide in the solution. The oligomeric phosphate with the average n of 0.3 to 0.8 is extracted from the resultant solution. The phosphorous compound is used in an amount of 5 to 20 parts by weight per 100 parts by weight of the base resin.

### (C) Perfluoroalkane Polymer

The flameproof thermoplastic resin compositions according to the present invention include a perfluoroalkane polymer. The examples of the perfluoroalkane polymer are polytetrafluoroethylene, polyvinylidene fluoride, copolymer of polytetrafluoroethylene and polyvinylidenefluoride, copolymer of tetrafluoroethylene and fluoroalkylvinylether, and copolymer of tetrafluoroethylene and hexafluoropropylene. At least one of the perfluoroalkane polymers may be used in the flameproof thermoplastic resin compositions. The perfluoroalkane polymer decreases the melting flow of the flameproof thermoplastic resin during combustion by forming a fibrillar network in the resin and increase the shrinkage of the resin, thereby preventing the dripping of the melting resin during combustion. The perfluoroalkane polymer may be preferably used in a form of powder so as to disperse and blend evenly in a flameproof thermoplastic resin composition. Polytetrafluoroethylene with a particle size of 20 to 500 µ is conventionally available for this invention. 0.1 to: 2.0 parts by weight of a perfluoroalkane polymer per 100 parts by weight of the base resin is blended.

The flameproof thermoplastic resin compositions may further include additives such as inorganic fillers, heat stabilizers, oxidation inhibitors, light stabilisers, pigments and/or dyes depending on specific applications. The examples of the inorganic fillers are asbestos, glass fiber, talc or ceramic. The other additives are conventionally available to a skilled person in this technical field. The additives may be blended in a resin composition with an amount up to 30 parts by weight per 100 parts by weight of the base resin.

The flameproof thermoplastic resin compositions are prepared by blending a base resin, a phosphorous compound and a perfluoroalkane polymer with a conventional mixer. An additive may be included in the blend. The flameproof thermoplastic resin compositions are prepared in a form of pellet by extruding the blend with a conventional extruder.

The flameproof thermoplastic resin compositions have effects that the compositions prevent toxic gases during combustion, and have a good combination of heat resistance, no juicing phenomenon, processability, appearance and flame retardency.

The invention may be better understood by reference to the following examples.

### EXAMPLES

The components to prepare flameproof thermoplastic resin compositions in Examples 1-3 and Comparative Examples 1-4 are as follow:

### (A) Base Resin

(a₁) Polycarbonate: L-1250W Grade of Teijin, Inc. of Japan was used.
(a₂) Styrene-containing Graft Polymer

50 g of butadiene latex in powder, 36 g of styrene, 14 g of acrylonitrile, and 150 g of deionized water were blended, and 1.0 g of potassium oleate, 0.4 g of cumenhydroperoxide and 0.3 g of a grafting reagent were added to the blended solution. The resultant solution was kept at 75 °C for 5 hours to prepare styrene- containing graft copolymer. To the styrene-containing graft copolymer 0.3 g of H₂SO₄ was added to prepare styrene-containing graft copolymer in powder.

### (B) Phosphorous Compound

Triphenylphosphate (n=0): triphenylphosphate was prepared by reacting trichlorophosphinoxide with phenol.

Oligomeric phosphate(n=1.4): CR-733S of Daihachi Co., of Japan was used.

Oligomeric phosphate: 114.7 g of phenol, 220 g of resocinol and 0.2 g of dichloromagnesium were added to 100 mℓ of benzene. The solution was heated to 70°C. 82.8 g of trichlorophosphinoxide was dropped in the solution over 2 hours at the temperature of 70°C. The resultant solution was stirred at 120°C over 3 hours not to release hydrogen chloride gas any more. The solvent and impurities were extracted from the solution so as to prepare oligomeric phosphate in liquid at room temperature with a melting point of -25°C and with n of 0.3 to 0.8 in the general formula (I).

### (C) Perfluoroalkane Polymer

Teflon(trademark) 7AJ of Dupont, Inc. of U.S.A. was used.

### Examples 1-3 and Comparative Examples 1-4

The compositions of each component used in Examples 1-3 and Comparative Examples 1-4 are shown in Table 1. A styrene-containing polymer was not used in Examples 1-3, but used in Comparative Examples 1-4.

In the Examples and Comparative Examples, the flameproof thermoplastic resin compositions were extruded in a form of pellet. And the resin pellets were molded into test specimens.

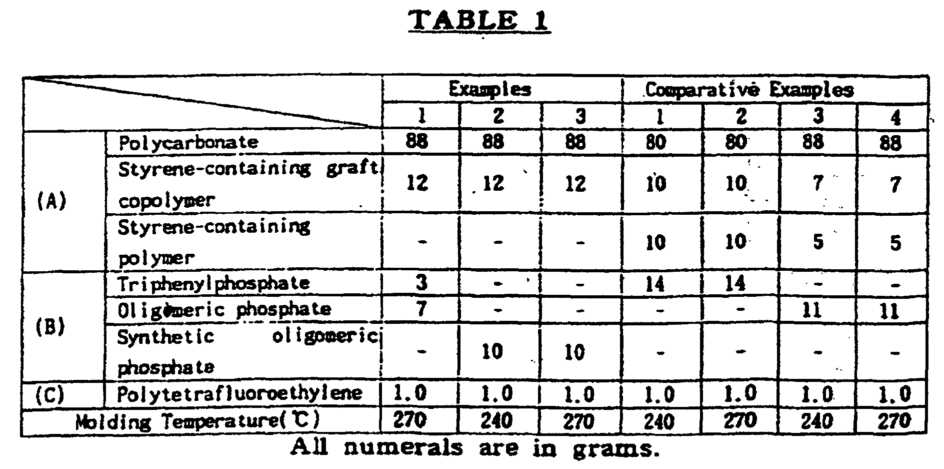

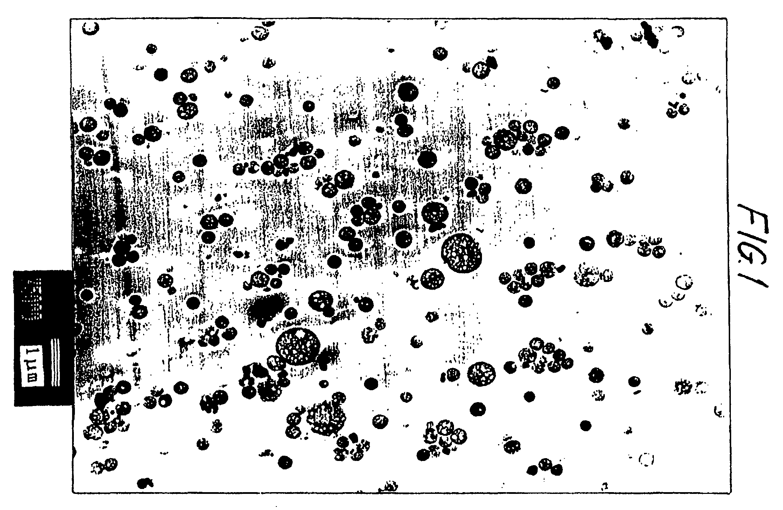

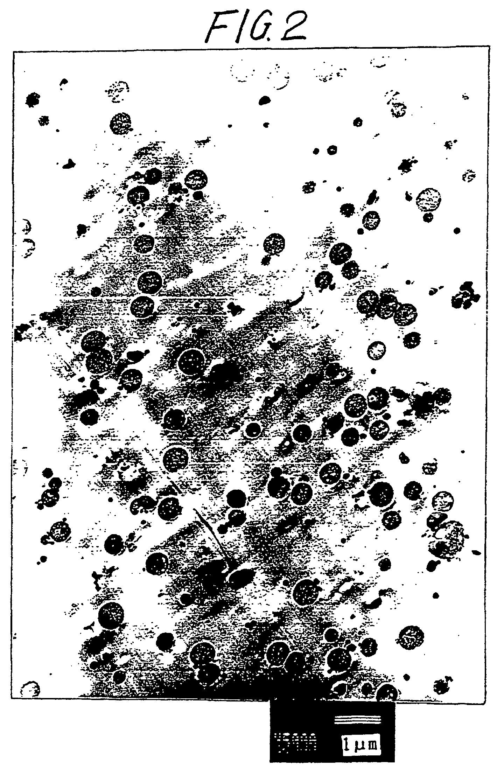

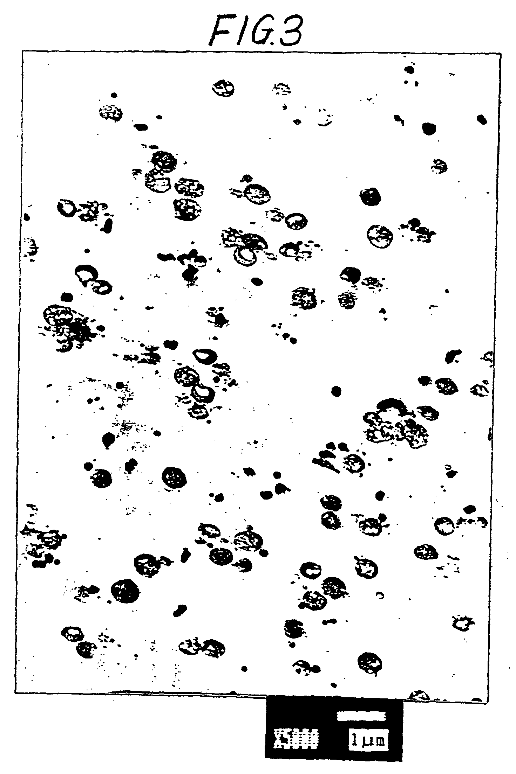

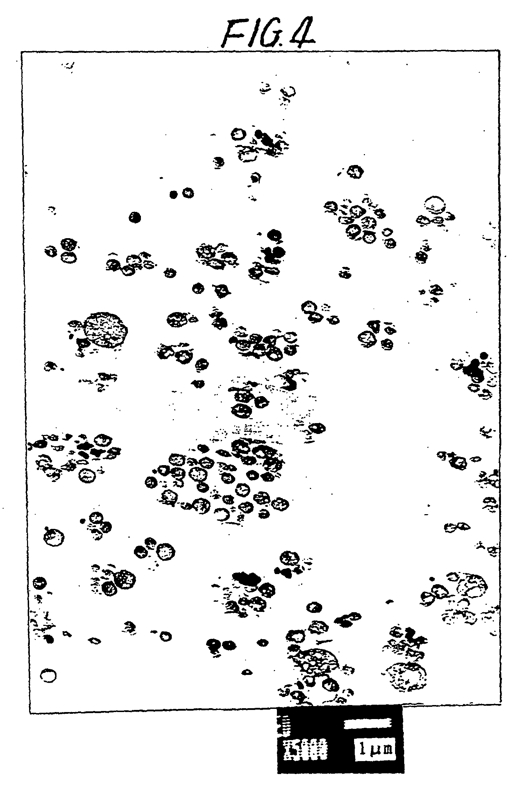

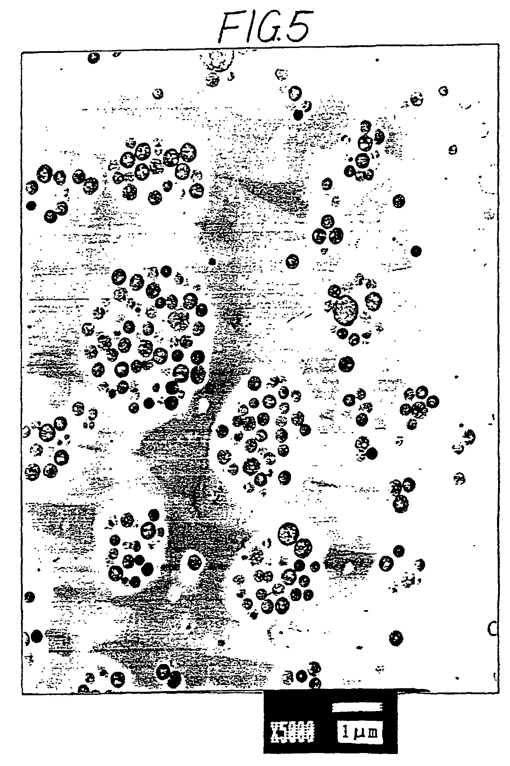

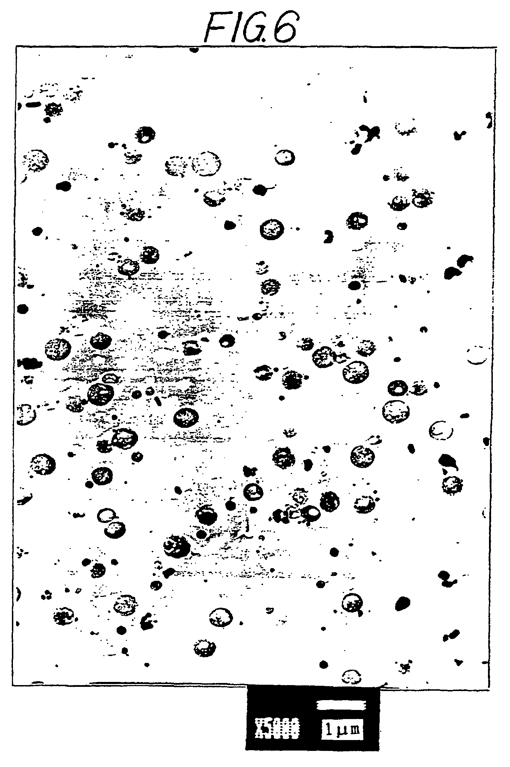

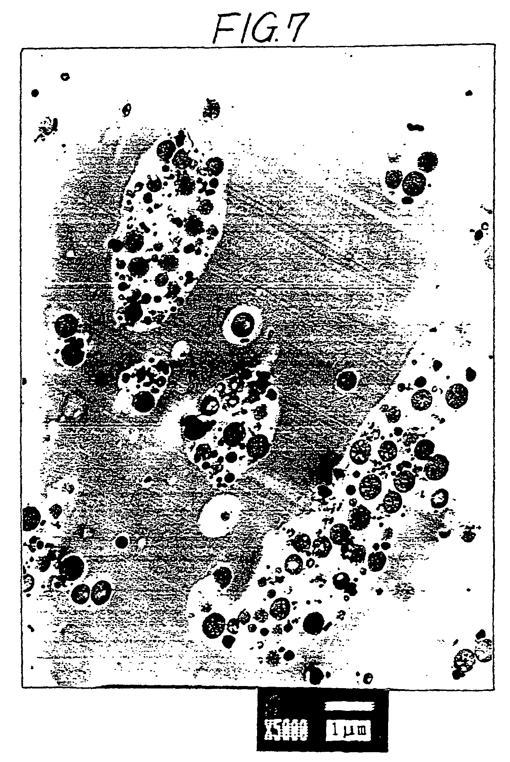

For the test specimens according to the Examples and Comparative Examples, flame retardency, impact strength, and heat resistance were measured, and juicing phenomenon and agglomeration were observed. The test results are shown in Table 2. Fig.1-7 represent transmission electron photomicrographs of resin compositions of Examples 1-3 and Comparative Examples 1-4. Examples 1-3 do not show agglomeration of the styrene-containing graft copolymer. Comparative Examples 1, 2 and 4 show agglomeration of the styrene-containing graft copolymer with the styrene-containing polymer, but Comparative Example 3 does not show agglomeration. It is believed that the agglomeration depends on the conditions of a molding process.

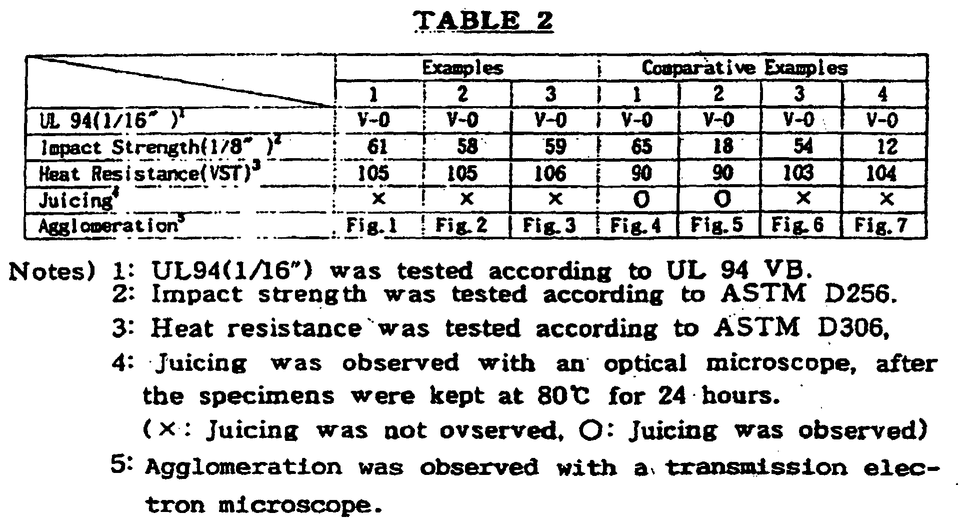

## Claims

1. A flameproof thermoplastic resin composition consisting essentially of:
(A) a base resin consisting of (a₁) 80 to 96 % by weight of a thermoplastic, halogen-free polycarbonate, and (a₂) 4 to 20 % by weight of a styrene-containing graft copolymer having a graft index of 40 to 90 % and a gel content of 40 % or above; excluding a SAN copolymer which is polymerized with at least one organic material selected from the group consisting of styrene, α-substituted. styrene and nucleus-substituted styrene and at least one organic material selected from the group consisting of methylmethacrylate, N-substituted meleimide and acrylonitrile;
(B) 5 to 20 parts by weight, per 100 parts by weight of the base resin (A), of a phosphorous compound consisting of 30 to 60 % by weight of triarylphosphates and 70 to 40 % by weight of oligomeric phosphates of the general formula 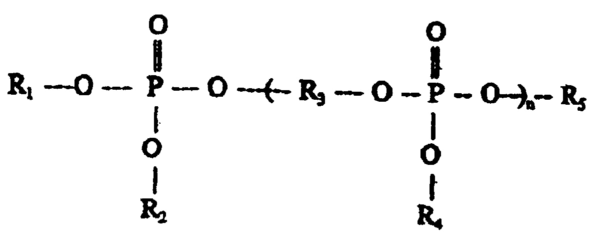 wherein R₁, R₂, R₃, and R₅ independently of one another are C₆-C₂₀ aryl or alkyl-substituted C₆-C₂₀ aryl, R₃ is C₆-C₂₀ arylene or alkyl-substituted C₆-C₂₀ arylene and the average n is 0.3 to 0.8; and
(C) 0.1 to 2.0 parts by weight, per 100 parts by weight of the base resin (A), of a perfluoroalkane polymer.

2. The thermoplastic resin composition defined in claim 1 wherein said styrene-containing graft copolymer has a graft index from 40 to 90 % and a gel content of 40 % or above, wherein the styrene-containing graft copolymer is made from 30 to 70 % by weight of rubber having a glass transition temperature less than 10 °C, 20 to 55 % by weight of at least one organic material selected from the group consisting of styrene, α-substituted styrene and nucleus-substituted styrene, 5 to 25 % by weight of acrylonitrile, and 0 to 20 % by weight of methylmethacrylate.

3. The thermoplastic resin composition defined in claim 1 wherein said perfluoroalkane polymer is selected from the group consisting of polytetrafluoroethylene, polyvinylidenefluoride, copolymer of tetrafluoroethylene and vinylidene fluoride, copolymer of tetrafluoroethylene and fluoroalkylvinylether, and copolymer of tetrafluoroethylene and hexafluoropropylene.

4. The thermoplastic resin composition defined in claim 1 wherein said resin composition further comprises inorganic fillers, heat stabilizers, oxidation inhibitors, light stabilizers, pigments and/or dyes.

## Patentansprüche

1. Flammensichere thermoplastische Harzzusammensetzung bestehend im wesentlichen aus:
(A) einem Grundharz bestehend aus (a₁) 80 bis 96 Gewichts-% eines thermoplastischen, halogenfreien Polycarbonats und (a₂) 4 bis 20 Gewichts-% eines styrenhaltigen Pfropfcopolymers mit einem Pfropfindex von 40 bis 90 % und einem Gelgehalt von 40 % oder mehr; ausgenommen ist ein SAN-Copolymer, das wenigstens aus einem organischen Materials ausgewählt aus der Gruppe bestehend aus Styren, α-substituiertem Styren und Kern-substituiertem Styren und mit wenigstens einem organischen Material ausgewählt aus der Gruppe bestehend aus Methylmethacrylat, N-substituiertem maleimid und Acrylonitril polymerisiert ist;
(B) 5 bis 20 Gewichtsteilen, pro 100 Gewichtsteilen des Grundharzes (A), einer Phosphorverbindung bestehend aus 30 bis 60 Gewichts-% Triarylphosphat und 70 bis 40 Gewichts-% eines oligomeren Phosphats der allgemeinen Formel 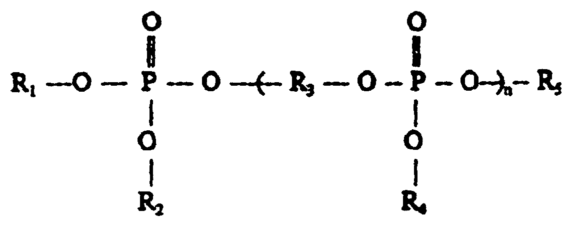 wobei R₁, R₂, R₄, und R₅ unabhängig voneinander C₆-C₂₀-Aryloder Alkyl-substituiertes C₆-C₂₀-Aryl sind, R₃ ist C₆-C₂₀-Arylen oder Alkyl-substituiertes C₆-C₂₀-Arylen und der durchschnittliche Wert von n beträgt 0.3 to 0.8; und
(C) 0.1 bis 2.0 Gewichtsteile, pro 100 Gewichtsteilen des Grundharzes (A), eines Perfluoroalkanpolymer.

2. Thermoplastische Harzzusammensetzung, wie sie in Anspruch 1 definiert ist, bei der der styrenhaltige Pfropfcopolymer einen Pfropfindex von 40 bis 90 % und einen Gelgehalt von 40 % oder mehr aufweist, wobei der styrenhaltige Pfropfcopolymer hergestellt wird aus 30 bis 70 Gewichts-% Kautschuk mit einer Glasübergangstemperatur von weniger als 10 °C, 20 bis 55 Gewichts-% eines organischen Materials ausgewählt aus der Gruppe bestehend aus Styren, α-substituiertem Styren und Kern-substituiertem Styren, 5 bis 25 Gewichts-% Acrylonitril, und 0 bis 20 Gewichts-% Methylmethacrylat.

3. Thermoplastische Harzzusammensetzung, wie sie in Anspruch 1 definiert ist, bei der dasPerfluoroalkanpolymer ausgewählt wird aus der Gruppe bestehend aus Polytetrafluoroethylen, Polyvinylidenfluorid, Copolymer aus Tetrafluoroethylen und Vinylidenfluorid, Copolymer aus Tetrafluoroethylen und Fluoroalkylvinylether, und Copolymer aus Tetrafluoroethylen und Hexafluoropropylen.

4. Thermoplastische Harzzusammensetzung, wie sie in Anspruch 1 definiert ist, bei der die Harzzusammensetzung außerdem anorganische Füllmittel, Hitzestabilisatoren, Oxidationsinhibitoren, Lichtstabilisatoren, Pigmente und/oder Farbstoffe enthält.

## Revendications

1. Composition de résine thermoplastique résistante à la flamme, constituée principalement de :
(A) une résine de base constituée de (a₁) 80 à 96 % en poids d'une polycarbonate thermoplastique exempte d'halogène, et (a₂) de 4 à 20 % en poids d'un copolymère greffé contenant du styrène ayant un indice de greffe de 40 à 90 % en poids et une teneur en gel de 40 % ou plus, excluant un copolymère SAN qui est polymérisé avec au moins un matériau organique sélectionné dans le groupe comprenant le styrène, le styrène à α stubstitué et le styrène à noyau substitué et au moins un matériau organique sélectionné dans le groupe comprenant le méthylméthacrylate, le méléimide à N substitué et l'acrylonitrile;
(B) 5 à 20 parties en poids, pour 100 parties en poids de la résine de base (A), d'un composé phosphoreux constitué de 30 à 60 % en poids de phosphates triaryliques et de 70 à 40 % en poids de phosphates oligomériques de formule générale 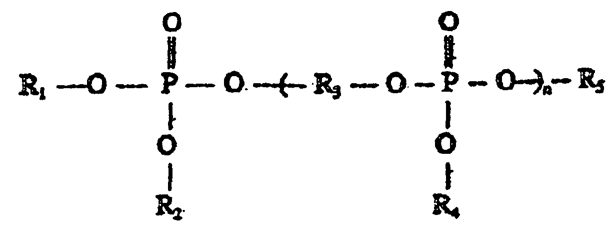 où R₁, R₂, R₄ et R₅ indépendamment les uns des autres sont C₆-C₂₀ aryle ou C₆-C₂₀ aryle à alkyle substitué, R₃ est C₆-C₂₀ arylène ou C₆-C₂₀ arylène à alkyle substitué et le n moyen est de 0,3 à 0,8 ; et
(C) 0,1 à 2,0 parties en poids, pour 100 parties en poids de la résine de base (A), d'un polymère perfluoroalkane.

2. Composition de résine thermoplastique selon la revendication 1, dans laquelle ledit copolymère greffé contenant du styrène a un indice de greffe de 40 à 90 % et une teneur en gel de 40 % ou plus, où ledit copolymère greffé contenant du styrène est constitué de 30 à 70 % en poids de caoutchouc ayant une température de transition vitreuse inférieure à 10 °C, de 20 à 55 % d'au moins un matériau organique sélectionné dans le groupe comprenant le styrène, le styrène à α stubstitué et le styrène à noyau substitué, de 5 à 20 % en poids d'acrylonitrile, et de 0 à 20 % en poids de méthylméthacrylate.

3. Composition de résine thermoplastique selon la revendication 1, dans laquelle ledit polymère de perfluoroalkane est sélectionné dans le groupe comprenant le polytétrafluoroéthylène, le fluorure de polyvinylidène, le copolymère de tétrafluoroéthylène et de fluorure de vinylidène, le copolymère de tétrafluoroéthylène et de fluoroalkylvinyléther, et le copolymère de tétrafluoroéthylène et d'hexafluoropropylène.

4. Composition de résine thermoplastique selon la revendication 1, dans laquelle ladite composition de résine comprend également des charges inorganiques, des stabliseurs thermiques, des inhibiteurs de l'oxydation, des stabiliseurs de lumière, des pigments et/ou des teintures.
